# FASCICULE DE BREVET EUROPEEN

(11) **EP 2 593 872 B1**
(45) Date de publication et mention de la délivrance du brevet: **01.09.2021**
(21) Numéro de dépôt: 11743309.4
(22) Date de dépôt: 07.07.2011
(51) Int. Cl.: G06F 12/08, G06F 9/46

(54) **PROCEDE D'OPTIMISATION D'ACCES MEMOIRE, LORS DE LA REPRISE D'EXECUTION D'UNE APPLICATION, DANS UN MICROPROCESSEUR COMPRENANT PLUSIEURS COEURS LOGIQUES ET PROGRAMME D'ORDINATEUR METTANT EN OEUVRE UN TEL PROCEDE**
VERFAHREN ZUR OMPTIMIERUNG DES SPEICHERZUGRIFFS IN EINEM MIKROPROZESSOR MIT MEHREREN LOGISCHEN KERNEN BEI DER WIEDERAUFNAHME DER AUSFÜHRUNG EINER ANWENDUNG SOWIE SOLCH EIN VERFAHREN IMPLEMENTIERENDES COMPUTERPROGRAMM
METHOD FOR OPTIMIZING MEMORY ACCESS IN A MICROPROCESSOR INCLUDING SEVERAL LOGIC CORES UPON RESUMPTION OF EXECUTING AN APPLICATION, AND COMPUTER PROGRAM IMPLEMENTING SUCH A METHOD

(30) Priorité: 12.07.2010 FR 1055681
(43) Date de publication de la demande: 22.05.2013
(73) Titulaire: Bull SAS, 78340 Les Clayes-sous-Bois (FR)
(72) Inventeur: COUVEE, Philippe, F-38190 Villard Bonnot (FR); KALEMKARIAN, Yann, F-38100 Grenoble (FR); WELTERLEN, Benoît, F-38000 Grenoble (FR)
(74) Mandataire: Argyma
(86) Numéro de dépôt international: PCT/FR2011/051616
(87) Numéro de publication internationale: WO 2012/007675

(56) Documents cités:
- US-A- 6 026 471
- US-A1- 2004 243 765
- US-A1- 2005 138 628
- US-A1- 2007 277 001
- None

## Description

La présente invention concerne les accès mémoire dans des microprocesseurs et plus particulièrement un procédé d'optimisation d'accès mémoire, lors de la reprise d'exécution d'une application, dans un microprocesseur comprenant plusieurs cœurs logiques, par exemple un microprocesseur mettant en œuvre une technologie connue sous le nom de *simultaneous multi-threading,* notamment dans le contexte du calcul haute performance, ainsi qu'un programme d'ordinateur mettant en œuvre un tel procédé.

Le calcul haute performance, aussi appelé HPC (sigle de *High Performance Computing* en terminologie anglo-saxonne) se développe pour la recherche universitaire comme pour l'industrie, notamment dans des domaines techniques tels que l'aéronautique, l'énergie, la climatologie et les sciences de la vie. La modélisation et la simulation permettent en particulier de réduire les coûts de développement, d'accélérer la mise sur le marché de produits innovants, plus fiables et moins consommateurs d'énergie. Pour les chercheurs, le calcul haute performance est devenu un moyen d'investigation indispensable.

Ces calculs sont généralement mis en œuvre sur des systèmes de traitement de données appelés clusters. Un cluster comprend typiquement un ensemble de nœuds interconnectés. Certains nœuds sont utilisés pour effectuer des tâches de calcul (nœuds de calcul), d'autres pour stocker des données (nœuds de stockage) et un ou plusieurs autres gèrent le cluster (nœuds d'administration). Chaque nœud est par exemple un serveur mettant en œuvre un système d'exploitation tel que Linux (Linux est une marque). La connexion entre les nœuds est, par exemple, réalisée à l'aide de liens Ethernet ou Infiniband (Ethernet et Infiniband sont des marques).

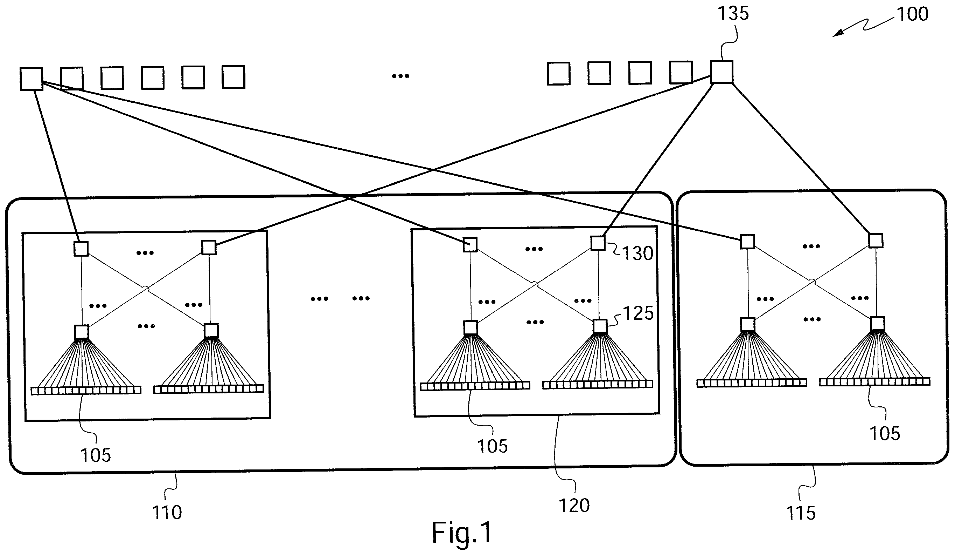

La figure 1 illustre schématiquement un exemple d'une topologie 100 d'un cluster, de type *fat-tree.* Ce dernier comprend un ensemble de nœuds génériquement référencés 105. Les nœuds appartenant à l'ensemble 110 sont ici des nœuds de calcul tandis que les nœuds de l'ensemble 115 sont des nœuds de service (nœuds de stockage et nœuds d'administration). Les nœuds de calcul peuvent être regroupés en sous-ensembles 120 appelés îlots de calcul, l'ensemble 115 étant appelé îlot de service.

Les nœuds sont reliés les uns aux autres par des commutateurs (appelés *switch* en terminologie anglo-saxonne), par exemple de façon hiérarchique. Dans l'exemple illustré sur la figure 1, les nœuds sont connectés à des commutateurs 125 de premier niveau qui sont eux-mêmes reliés à des commutateurs 130 de deuxième niveau qui sont à leur tour reliés à des commutateurs 135 de troisième niveau.

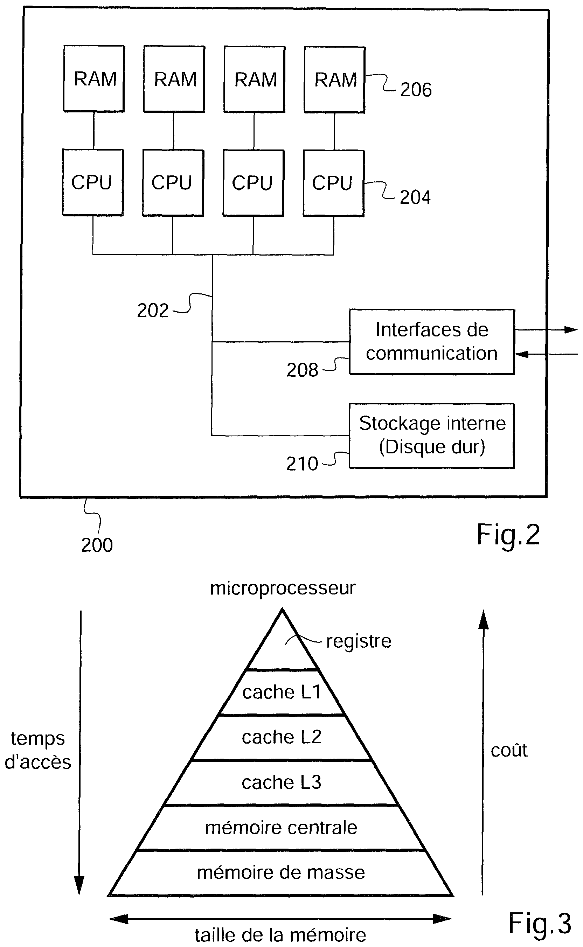

Comme illustré sur la figure 2, chaque nœud comprend généralement un ou plusieurs microprocesseurs, des mémoires locales ainsi qu'une interface de communication. Plus précisément, le nœud 200 comporte ici un bus de communication 202 auquel sont reliés :
- des unités centrales de traitement ou microprocesseurs 204 (ou CPU, sigle de *Central Processing Unit* en terminologie anglo-saxonne) ;
- des composants de mémoire vive 206 (RAM, acronyme de *Random Access Memory* en terminologie anglo-saxonne) comportant des registres adaptés à enregistrer des variables et paramètres créés et modifiés au cours de l'exécution de programmes (comme illustré, chaque composant de mémoire vive peut être associé à un microprocesseur) ; et,
- des interfaces de communication 208 adaptées à transmettre et à recevoir des données.

Le nœud 200 dispose en outre ici de moyens de stockage interne 210, tels que des disques durs, pouvant notamment comporter le code exécutable de programmes.

Le bus de communication permet la communication et l'interopérabilité entre les différents éléments inclus dans le nœud 200 ou reliés à lui. Les microprocesseurs 204 commandent et dirigent l'exécution des instructions ou portions de code logiciel du ou des programmes. Lors de la mise sous tension, le ou les programmes qui sont stockés dans une mémoire non volatile, par exemple un disque dur, sont transférés dans la mémoire vive 206.

Pour améliorer les performances de chaque nœud, les microprocesseurs utilisés sont souvent des microprocesseurs multi-cœurs, c'est-à-dire des microprocesseurs comprenant plusieurs coeurs pouvant être utilisés en parallèle.

Par ailleurs, le temps d'exécution d'instructions dans un microprocesseur étant généralement plus court que le temps d'accès à des données en mémoire, des mémoires particulières, appelées mémoires caches sont généralement utilisées. Ainsi, typiquement, il existe une hiérarchie mémoire selon laquelle différentes mémoires sont organisées selon leur temps d'accès et leur coût et, par conséquent, leur taille. Une telle organisation est représentée sur la figure 3. La mémoire comprend ici six types de mémoires organisés de façon hiérarchique : une mémoire de masse, une mémoire centrale, une mémoire cache de niveau L3, une mémoire cache de niveau L2, une mémoire cache de niveau L1 et un registre. Comme illustré, plus le type de la mémoire est cher et rapide, plus la taille de la mémoire correspondante est limitée.

Une optimisation possible de l'exécution d'une application consiste alors à faire remonter des données dans la hiérarchie mémoire au cours de l'exécution de l'application, d'une mémoire de bas niveau, par exemple une mémoire de masse, vers une mémoire cache de haut niveau, de préférence une mémoire cache de niveau L1, ou un registre, de telle sorte que les données devant être utilisées soient aussi proches que possible du microprocesseur lorsque ce dernier en a besoin. Une telle optimisation, connue sous le nom de *prefetching* en terminologie anglo-saxonne, peut être explicite et réalisée dans l'application elle-même à l'aide d'instructions correspondantes. Elle peut également être implicite et réalisée par un compilateur lors de la compilation de l'application ou par le microprocesseur lui-même lors de l'exécution de l'application.

Cependant, alors que cette technologie permet d'améliorer significativement les performances d'un microprocesseur, sa mise en œuvre peut être perturbée par l'exécution de programmes annexes. En effet, lors de l'exécution d'un programme principal, des interruptions sont souvent générées pour exécuter, notamment, des tâches annexes du système d'exploitation appelées démons. Suite à une interruption et lors de l'exécution d'un démon, les mémoires caches sont alors optimisées pour l'exécution de ce démon. Par conséquent, après l'exécution du démon et lorsque le microprocesseur exécute à nouveau l'application principale, les mémoires caches contiennent des données relatives au démon et il existe un temps de latence du à la remontée, dans la hiérarchie mémoire, de données liées à l'application principale.

Dans le contexte de l'exécution de plusieurs processus qui font appel à une mémoire cache partagée, le document US 2007/277001 A1 divulgue un procédé qui vise à éviter une fuite d'informations entre les processus.

L'invention permet de résoudre au moins un des problèmes exposés précédemment.

L'invention a ainsi pour objet un procédé pour ordinateur d'optimisation d'accès mémoire dans un microprocesseur dudit ordinateur lors de la reprise d'exécution d'une application principale, ledit microprocesseur permettant l'exécution simultanée d'au moins deux processus dans un environnement comprenant une mémoire partagée organisée de façon hiérarchique comprenant au moins une partie haute et une partie basse, au moins une donnée étant copiée de la partie basse vers la partie haute pour être traitée par ladite application principale, ledit ordinateur étant adapté à interrompre l'exécution de ladite application principale, ce procédé comprenant les étapes suivantes,
- lors d'une interruption de l'exécution de ladite application principale,
   ∘ mémorisation d'au moins une référence à au moins une donnée mémorisée dans une partie haute de ladite mémoire, ladite au moins une donnée devant être utilisée pour permettre l'exécution de ladite application principale ;
- après une programmation d'une reprise d'exécution de ladite application principale et avant la reprise d'exécution de ladite application principale,
   ∘ accès à ladite au moins une donnée dans une partie basse de ladite mémoire selon ladite au moins une référence ; et,
   ∘ mémorisation de ladite au moins une donnée dans une partie haute de ladite mémoire.

Le microprocesseur employé dans l'invention est un microprocesseur multi-cœurs qui permet la mise en œuvre d'au moins deux cœurs logiques dans un même cœur physique, chacun desdits au moins deux processus pouvant être exécuté par un cœur logique, lesdits au moins deux cœurs logiques partageant ladite mémoire partagée, ladite application principale étant exécutée par l'un desdits au moins deux cœurs logiques, des instructions relatives à l'exécution desdites étapes d'accès et de mémorisation de ladite au moins une donnée étant transmises à l'autre desdits au moins deux cœurs logiques sur lequel est lancé un processus fils de chargement de mémoire.

Le procédé selon l'invention permet ainsi, par anticipation, d'accéder à des données devant être traitées par une application lors de sa reprise, réduisant ainsi le temps de cette reprise.

Le procédé selon l'invention permet aussi d'optimiser l'accès aux données nécessaire à la reprise d'exécution de l'application principale sans dégrader les performances d'exécution des applications.

Le microprocesseur étant un microprocesseur multi-cœurs, lesdits au moins deux cœurs logiques étant mis en œuvre dans un même cœur physique, ils partagent une partie importante de la hiérarchie mémoire utilisée afin d'optimiser l'accès aux données et donc la reprise d'exécution d'une application principale.

Le procédé comprend en outre, de préférence, une étape d'accès à au moins un paramètre de configuration de ladite application principale, ladite étape d'accès à ladite au moins une donnée étant réalisée selon ledit au moins un paramètre.

De façon avantageuse, le procédé comprend en outre une étape préliminaire de déclaration durant laquelle ladite au moins une application principale est déclarée privilégiée et une étape de définition dudit au moins paramètre. Une telle déclaration permet de déclencher le procédé d'optimisation d'accès mémoire de façon sélective selon les applications exécutées.

Selon un mode de réalisation particulier, le procédé comprend en outre une étape de vérification dudit au moins un paramètre, ledit au moins un paramètre définissant une taille de bloc de données, ladite au moins une référence comprenant au moins une adresse mémoire. Le procédé permet ainsi d'éviter des erreurs d'accès mémoire.

Selon un mode de réalisation particulier, lesdites instructions de mémorisation de ladite au moins une référence à ladite au moins une donnée et d'accès à ladite au moins une donnée sont initiées par une couche logique dudit ordinateur, par exemple une couche d'un système d'exploitation mis en œuvre dans ledit ordinateur. Le procédé selon l'invention est ainsi facile à mettre en œuvre et ne requiert que peu de modifications.

L'invention a également pour objet un programme d'ordinateur comprenant des instructions adaptées à la mise en œuvre de chacune des étapes du procédé décrit précédemment lorsque ledit programme est exécuté sur un ordinateur ainsi qu'un moyen de stockage d'informations, amovible ou non, partiellement ou totalement lisible par un ordinateur ou un microprocesseur comportant des instructions de code d'un programme d'ordinateur pour l'exécution de chacune des étapes du procédé décrit précédemment.

Les avantages procurés par ce programme d'ordinateur et ce moyen de stockage sont similaires à ceux évoqués précédemment.

D'autres avantages, buts et caractéristiques de la présente invention ressortent de la description détaillée qui suit, faite à titre d'exemple non limitatif, au regard des dessins annexés dans lesquels :
- la figure 1 illustre un exemple de topologie d'un cluster ;
- la figure 2 illustre un exemple d'architecture d'un nœud d'un cluster ;
- la figure 3 représente schématiquement l'organisation hiérarchique de mémoires dans un système de traitement de données ;
- la figure 4, comprenant les figures 4a et 4b, illustre le concept général de l'invention selon lequel des données sont préchargées de façon anticipée ;
- la figure 5 illustre un exemple de séquences d'instructions dans un cœur de processeur comprenant deux cœurs logiques mettant en œuvre l'invention ;
- la figure 6, comprenant les figures 6a à 6d, représente des extraits du contenu d'une mémoire cache de niveau L1 du cœur du microprocesseur décrit en référence à la figure 5, à différents instants ;
- la figure 7, comprenant les figure 7a et 7b, illustre schématiquement certaines étapes d'un exemple d'algorithme mis en œuvre dans un système d'exploitation pour offrir une fonction de *memory feeding* à une application principale ;
- la figure 8 illustre certaines étapes d'un exemple d'algorithme mis en œuvre par un processus fils de chargement mémoire permettant d'optimiser la reprise d'exécution d'une application principale ; et,
- la figure 9 représente de façon simplifiée l'architecture logique d'un microprocesseur d'un nœud appartenant à un cluster, le microprocesseur comprenant ici deux cœurs mettant en œuvre chacun deux cœurs logiques.

De façon générale, l'invention vise un mécanisme de chargement anticipé de mémoire cache pour charger des données liées à l'exécution d'une première application, durant l'exécution d'une seconde application exécutée suite à une interruption de l'exécution de la première application, afin de permettre une reprise d'exécution optimale de la première application.

Il est rappelé ici que certains microprocesseurs comprennent plusieurs cœurs logiques. Lorsque ces microprocesseurs comprennent plusieurs cœurs physiques, chacun d'eux est généralement adapté à mettre en œuvre plusieurs cœurs logiques. Cette technologie, appelée, en terminologie anglo-saxonne, *simultaneous multi-threading* (ou *hyperthreading* selon l'implémentation d'Intel, Intel est une marque), permet à plusieurs processus élémentaires (appelés *threads* en terminologie anglo-saxonne) d'être exécutés en parallèle dans un cœur physique d'un microprocesseur. Un cœur physique mettant en œuvre cette technologie est ainsi généralement perçu comme un double-cœur par la couche logique exploitant le cœur physique.

Un cœur physique mettant en œuvre cette technologie comprend des ressources partagées entre les cœurs logiques et des ressources propres à chaque cœur logique. Les ressources partagées sont typiquement les unités d'exécution, les mémoires caches et les interfaces de bus. Les ressources propres sont notamment les registres de données et d'instructions du cœur logique, de segments et de contrôle ainsi que le contrôleur d'interruption (appelé APIC, sigle *d'Advanced Programmable Interrupt Controller* en terminologie anglo-saxonne).

Cependant, alors que cette technologie permet d'améliorer significativement les performances d'un microprocesseur pour des applications particulières, notamment des applications de traitement d'images, il a été observé que ces performances n'étaient que peu améliorées, voir dégradées, pour d'autres applications, notamment des applications de calcul scientifique. Elle est donc généralement désactivée dans les clusters utilisés pour du calcul haute performance.

Néanmoins, cette technologie permettant l'exécution d'un nombre restreint d'instructions par un cœur logique sans perturber l'exécution d'une autre application exécutée par un autre cœur logique, l'invention l'utilise pour permettre le chargement anticipé d'une mémoire cache lorsqu'une application annexe est exécutée. Ainsi, à un instant donné, un premier cœur logique est associé à l'exécution de l'application annexe tandis qu'un second cœur logique est utilisé pour charger une mémoire cache avec des données relatives à une application principale (c'est-à-dire une application privilégiée), de façon anticipée.

Ainsi, selon l'invention, un premier processus, par exemple un processus applicatif de type HPC, est assisté d'un second processus, appelé processus fils, qui a pour fonction de ramener en mémoire cache des données nécessaires à l'exécution du premier processus après que celle-ci ait été interrompue. Les données sont ramenées en avance de phase pour optimiser la reprise de l'exécution du premier processus. Ces processus sont avantageusement mis en œuvre dans deux cœurs logiques d'un cœur physique pour optimiser les performances d'exécution du premier processus sans augmenter les coûts liés aux composants matériels utilisés. Un tel mécanisme, pouvant être considéré comme un *prefetching* de transition, est ici appelé *memory feeding.*

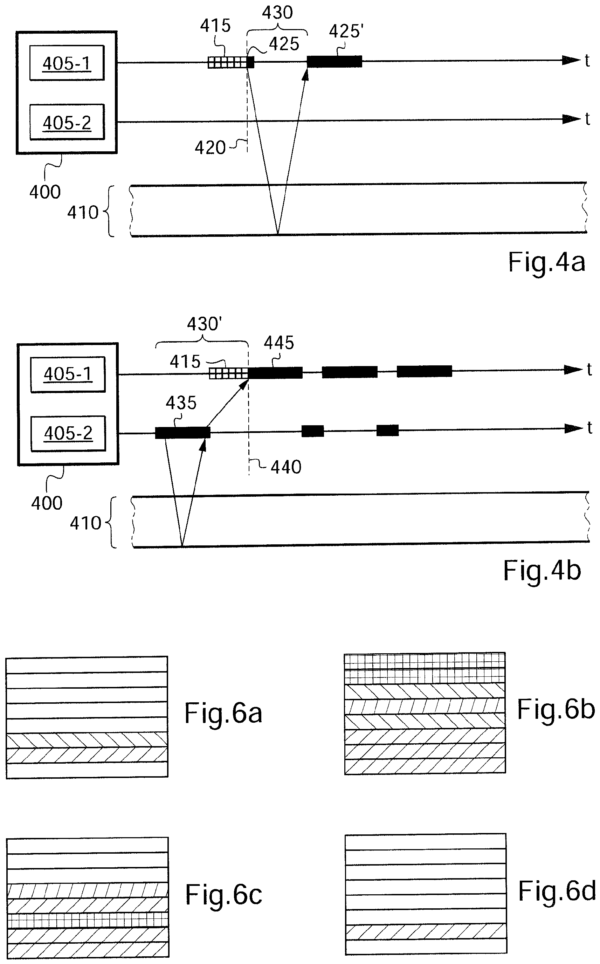

La figure 4, comprenant les figures 4a et 4b, illustre le concept général de l'invention. Plus précisément, la figure 4a représente un diagramme de séquence lors de la reprise d'exécution d'une tâche dans un microprocesseur permettant la mise en œuvre de deux cœurs logiques dont un cœur logique n'est pas utilisé tandis que la figure 4b représente un diagramme de séquence lors de la reprise d'exécution d'une tâche dans ce même microprocesseur lorsque les deux cœurs logiques sont utilisés pour mettre en œuvre l'invention.

Le processeur utilisé pour exécuter une application principale comprend ici un cœur physique 400 mettant en œuvre deux cœurs logiques 405-1 et 405-2. Les lignes placées à droites du cœur 400 représentent, de façon temporelle, les tâches exécutées par chacun des cœurs logiques. La référence 410 désigne ici la profondeur de la hiérarchie mémoire. La partie inférieure représente la partie basse de la hiérarchie, c'est-à-dire la mémoire de bas niveau (la mémoire la plus distante du microprocesseur), tandis que la partie supérieure représente la partie haute de la hiérarchie, c'est-à-dire la mémoire de haut niveau (la mémoire la plus proche du microprocesseur). Ainsi, pour traiter une donnée non présente dans une mémoire de haut niveau, une instruction d'accès à cette donnée doit descendre la chercher dans une mémoire de plus bas niveau puis la remonter.

Comme illustré sur la figure 4a, lorsque le cœur logique 405-2 n'est pas utilisé, le cœur logique 405-1 exécute toutes les tâches. Il est admis ici que l'exécution de l'application principale est interrompue à un instant donné (non représenté) pour exécuter une application annexe dont fait partie, par exemple, la tâche 415. Durant l'exécution de cette tâche, les mémoires caches contenant des données relatives à l'application principale se vident au profit de données relatives à l'application annexe. Ainsi, lors de la reprise de l'exécution de l'application principale, à l'instant référencé 420, la tâche 425 de l'application principale est suspendue durant une période référencée 430 correspondant au temps d'accès aux données nécessaires à l'exécution de la tâche. Le temps d'accès à ces données est ici matérialisé par la flèche (descente et montante) traversant la profondeur de la hiérarchie mémoire. Comme indiqué par la référence 425', l'exécution de l'application principale reprend dès que les données sont disponibles. Si les données recherchées ne sont généralement plus dans la mémoire la plus proche du microprocesseur, elles ne sont pas non plus systématiquement dans la mémoire la plus éloignée. Ainsi, la période 430 a une durée variable liée à la position des données recherchées dans la hiérarchie mémoire.

Lorsque deux cœurs logiques d'un cœur physique sont utilisés pour mettre en œuvre l'invention, l'un des cœurs logiques, par exemple le cœur logique 405-1, est utilisé pour exécuter l'application principale ainsi que les applications annexes, notamment les démons, tandis que l'autre cœur logique, ici le cœur logique 405-2, est utilisé pour exécuter une application liée à l'application principale et permettant un *prefetching* de transition. Comme illustré sur la figure 4b, une tâche 415 d'une application annexe peut être exécutée par le cœur logique 405-1 suite à l'interruption de l'exécution du programme principale. Parallèlement, le cœur logique 405-2 est utilisé pour charger dans une mémoire proche du microprocesseur, typiquement une mémoire cache de niveau L1, des données qui seront nécessaires à l'exécution de l'application principale lors de sa reprise. Cette tâche d'accès aux données permettant la reprise de l'exécution de l'application principale est ici référencée 435. Ainsi, lors de la reprise de l'exécution de l'application principale, référencée 440, les données nécessaires à son exécution sont présentes dans une mémoire à proximité du microprocesseur qui peut alors exécuter une tâche 445 de l'application principale sans attendre la disponibilité de données. Le temps d'accès à ces données, référencé 130', est un temps masqué par l'exécution d'applications annexes. Il ne nuit donc pas à l'exécution de l'application principale.

Il est observé ici que le mode de coopération entre une application principale exécutée par un cœur logique et une application secondaire, exécutée par un second cœur logique, ayant pour objet le chargement de données relatives à cette application principale, peut être strict ou lâche. Lorsque le mode de coopération est strict, une synchronisation explicite entre les applications est nécessaire tandis que s'il est lâche, ces applications sont exécutées indépendamment l'une de l'autre, l'application secondaire de chargement de données pouvant connaître les besoins en termes de mémoire de l'application principale.

Des références mémoires sont avantageusement utilisées pour permettre à l'application secondaire d'anticiper les accès mémoires de l'application principale afin de lui raccourcir le temps d'accès mémoire correspondant lors de la reprise de son exécution. La cartographie mémoire peut être obtenue à partir d'une analyse statique réalisée à partir des données issues de la compilation de l'application principale. Cette cartographie permet de désigner des blocs de mémoires qui, associés avec un découpage du temps, permettent d'anticiper les accès mémoire de l'application principale. La cartographie peut aussi être dynamique, déduite à partir de lecture de traces de contexte mémoire laissées par, l'application elle-même, par le code du changement de contexte du système d'exploitation du matériel ou via des mécanismes inter-processus.

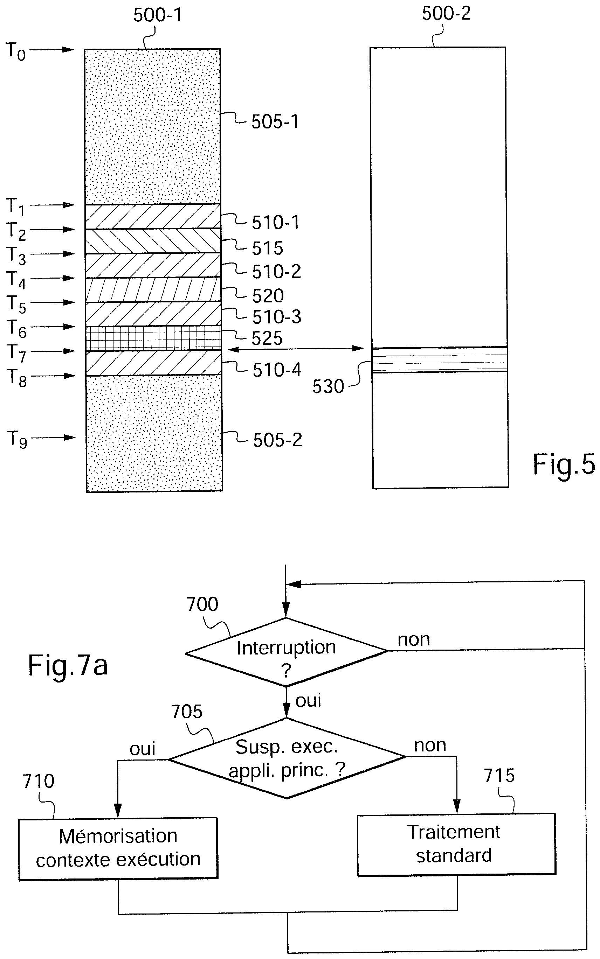

La figure 5 illustre un exemple de séquences d'instructions dans un cœur de processeur comprenant deux cœurs logiques mettant en œuvre l'invention. La figure 6, décrite parallèlement à la figure 5 et comprenant les figures 6a à 6d, représente des extraits du contenu d'une mémoire cache de niveau L1 du cœur du microprocesseur décrit en référence à la figure 5, à différents instants.

Sur la figure 5, les références 500-1 et 500-2 désignent des séquences d'instructions d'un premier et d'un second moteurs d'instructions, correspondant à un premier et un second cœurs logiques, respectivement. Le premier moteur d'instructions est utilisé pour l'exécution de plusieurs applications dont une application principale de calcul HPC et de tâches annexes du système d'exploitation. Le second moteur d'instructions est dédié à l'exécution d'une application secondaire permettant le chargement de données liées à une application principale exécutée par le premier moteur d'instructions, ici une application de calcul HPC.

Entre les instants t₀ et t₁, les instructions exécutées par le cœur logique correspondant à la séquence d'instructions 500-1 sont des instructions de l'application principale de calcul HPC, référencées 505-1. Entre les instants t₁ et t₂, les instructions exécutées par le cœur logique correspondant à la séquence d'instructions 500-1 sont des instructions d'une tâche du système d'exploitation, référencées 510-1.

A l'instant t1, un mécanisme de *prefetching* est mis en œuvre, de façon standard, pour précharger des données relatives aux instructions 510-1 afin d'optimiser l'exécution de ces instructions. La mémoire cache de niveau L1 du cœur du microprocesseur comprend alors essentiellement des données relatives à l'application principale de calcul HPC préalablement exécutée ainsi que quelques données relatives à la tâche exécutée du système d'exploitation, comme illustré sur la figure 6a.

En outre, l'application principale de calcul HPC étant référencée comme application privilégiée, le contexte d'exécution est mémorisé lorsque l'exécution de cette application est interrompue. En d'autres termes, les adresses des données présentes en mémoire cache sont mémorisées pour permettre leur chargement ultérieur, avant la reprise de l'exécution de cette application principale.

Entre les instants t₂ et t₃, les instructions exécutées par le cœur logique correspondant à la séquence d'instructions 500-1 sont des instructions d'une première application annexe, référencées 515. De même, entre les instants t₃ et t₄, les instructions exécutées par le cœur logique correspondant à la séquence d'instructions 500-1 sont des instructions de la tâche du système d'exploitation précédemment mentionnée, référencées 510-2. De façon similaire, entre les instants t₄ et t₅, les instructions exécutées par le cœur logique correspondant à la séquence d'instructions 500-1 sont des instructions d'une deuxième application annexe, référencées 520. Entre les instants t₅ et t₆, les instructions exécutées par le cœur logique correspondant à la séquence d'instructions 500-1 sont des instructions de la tâche du système d'exploitation précédemment mentionnée, référencées 510-3. De façon similaire, entre les instants t₆ et t₇, les instructions exécutées par le cœur logique correspondant à la séquence d'instructions 500-1 sont des instructions d'une troisième application annexe, référencées 525. La mémoire cache de niveau L1 du cœur du microprocesseur comprend alors des données relatives à la tâche du système d'exploitation exécutée ainsi qu'aux première, deuxième et troisième applications annexes, comme illustré sur la figure 6b.

Entre les instants t₀ et t₇, le cœur logique correspondant à la séquence d'instructions 500-2 n'exécute aucune instruction.

A l'instant t₇, le mécanisme de *memory feeding,* permettant le chargement anticipé de données relatives à une application principale avant la reprise de son exécution est mis en œuvre. A cet instant, le cœur logique correspondant à la séquence d'instructions 500-2 exécute alors des instructions, référencées 530, pour charger en mémoire cache les données dont les adresses ont été mémorisées lors de l'interruption du programme principal.

Ainsi, entre les instants t₇ et t₈, les instructions exécutées par le cœur logique correspondant à la séquence d'instructions 500-1 sont des instructions de la tâche du système d'exploitation précédemment mentionnée, référencées 510-4, tandis que les instructions exécutées par le cœur logique correspondant à la séquence d'instructions 500-2 sont des instructions permettant le chargement en mémoire cache des données dont les adresses ont été mémorisées lors de l'interruption du programme principal.

A l'instant t₈, la mémoire cache de niveau L1 du cœur du microprocesseur comprend alors des données relatives à la tâche du système d'exploitation exécutée, aux deuxième et troisième applications annexes, c'est-à-dire des données relatives aux dernières instructions exécutées, ainsi que des données relatives à l'application principale et permettant une reprise optimale de l'exécution de cette dernière, comme illustré sur la figure 6c. L'exécution du programme principale est reprise à cet instant comme illustré par la référence 505-2. Toujours à partir de cet instant, le cœur logique correspondant à la séquence d'instructions 500-2 n'exécute plus d'instruction.

Comme illustré sur la figure 6d, la mémoire cache de niveau L1 du cœur du microprocesseur comprend, à l'instant t₉, essentiellement des données relatives à l'application principale de calcul HPC ainsi que quelques données relatives à la tâche du système d'exploitation préalablement exécutée qui n'ont pas encore été remplacées par des données relatives à l'application principale de calcul HPC.

Ainsi, l'application principale exécutée sur l'un des cœurs logiques est aidée par un processus fils exécuté sur un autre cœur logique du même cœur physique. Ce processus fils assume la tâche de ramener en mémoire les données nécessaires à l'application principale en avance de phase pour économiser des cycles d'attente que l'application principale devrait subir en attendant d'obtenir les données demandées.

En d'autres termes, l'invention a notamment pour objet la mise en place d'un mécanisme coopératif entre le système d'exploitation utilisé et un processus de chargement mémoire exécuté par un cœur logique appartenant à un cœur physique dont un autre cœur logique exécute une application principale, les cœurs logiques partageant au moins une partie de la hiérarchie mémoire.

Ainsi, typiquement, le système d'exploitation lance sur un cœur logique spécifié un processus fils permettant de mettre en œuvre une fonction de *memory feeding* lorsqu'il est appelé ou sollicité. Ce processus fils ne peut être utilisé que pour des applications considérées comme principales c'est-à-dire, par exemple, déclarées avec un privilège particulier. Il est observé que lorsqu'une application a été déclarée avec un tel privilège, le système d'exploitation fait les vérifications nécessaires en termes de privilège et de paramétrage. Si, après vérification, l'autorisation est donnée, l'application principale peut accéder à la fonction de *memory feeding* lorsqu'elle est interrompue dans son exécution.

Lorsque l'application principale est interrompue, le système d'exploitation mémorise des repères sur les zones mémoires utilisées par cette application avant son interruption. Après que ces repères aient été mémorisés, le système d'exploitation peut élire une nouvelle tâche non-privilégiée qui est alors exécutée par le cœur logique exécutant préalablement l'application principale. De tels repères sont, par exemple, des couples formés d'adresses et de longueurs, spécifiant des ensembles de données.

Lorsque le système d'exploitation détermine la reprise de l'exécution de l'application principale via son ordonnanceur, il commande la fonction de *memory feeding* auprès du processus fils. Ce dernier déclenche alors les lectures à partir des références de zones de mémoires que le système d'exploitation a conservé. Il va ainsi raccourcir la distance mémoire et faire gagner des cycles d'attente à chaque redémarrage de changement de contexte.

De façon avantageuse, une application principale peut contrôler l'appel à la fonction de *memory feeding* en activant ou en désactivant le service auprès du système d'exploitation.

Bien entendu, l'application principale et le processus fils doivent être exécutés dans des environnements dans lesquels au moins une partie de la hiérarchie mémoire est partagée. L'application principale et le processus fils sont ainsi, de préférence, exécutés par deux cœurs logiques d'un même cœur physique.

Le standard OpenCL peut être utilisé pour mettre en œuvre l'interface décrite précédemment entre une application principale et un processus fils de chargement mémoire permettant l'utilisation de la fonction de *memory feeding.* Les fonctions utilisées dans une telle interface sont, par exemple, les suivantes :
- une fonction pour retourner les capacités de *memory feeding* du système d'exploitation utilisé à une application,
   *cl_int clMFeedQuery(*
   *cl_MFeed *mf)*
   où *mf* représente le paramètre de la fonction dont le type est *cl_MFeed;*
- une fonction permettant à une application de se déclarer comme application privilégiée auprès du système d'exploitation afin de bénéficier de la fonction de *memory feeding,*
   *cl_int clMFeedDeclare(*
   *cl_MFeedmf,*
   *cl_MFeedParams *mfparams)*
   où *mf* représente le paramètre de la fonction dont le type est *cl_MFeed*et *mfparams* représente le paramètre de la fonction dont le type est *c*/*_MFeedParams ;*

De façon avantageuse, cette fonction modifie le paramétrage de l'application, notamment en termes de taille de blocs de données à *prefetcher* et de synchronisation avec le processus fils pour effectuer le *memory feeding.* Ces paramètres sont importants et doivent, de préférence, faire l'objet de contrôles car un mauvais paramétrage a pour effet d'accentuer les effets de pollution pour les autres processus exécutés ; et,
- une fonction d'activation et une fonction de désactivation du service de *memory feeding,*
   *cl_int clMFeedStart(*
   *cl_MFeed *mf)*
   *cl_int clMFeedStop(*
   *cl_MFeed*mf)*
   où *mf* représente le paramètre de la fonction dont le type est *cl_MFeed.*

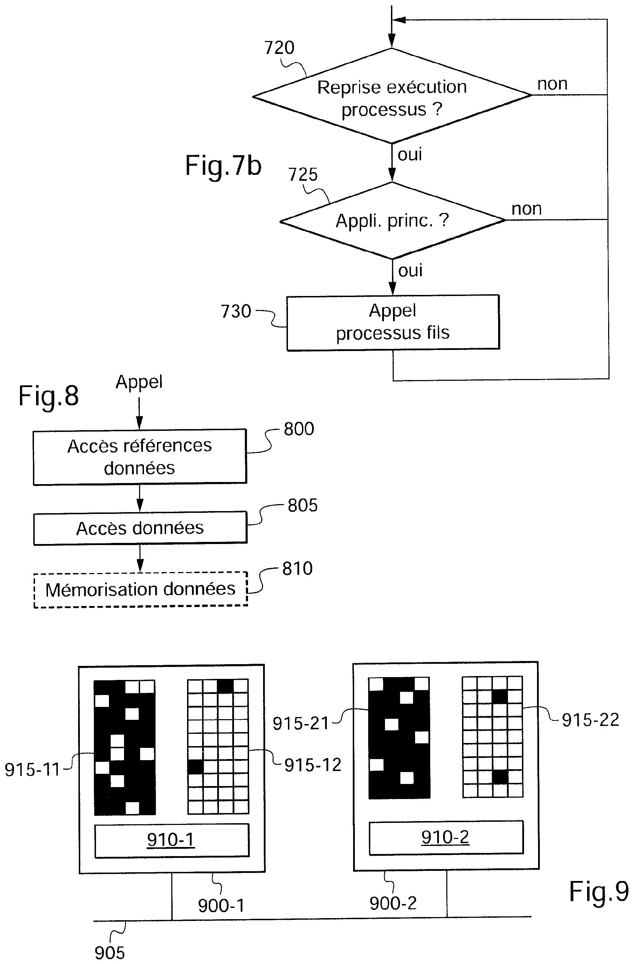

La figure 7, comprenant les figures 7a et 7b, illustre schématiquement certaines étapes d'un exemple d'algorithme mis en œuvre dans un système d'exploitation pour offrir une fonction de *memory feeding* à une application principale. La figure 7a vise essentiellement la phase liée à l'interruption de l'exécution d'une application principale tandis que la figure 7b est relative à sa reprise.

Il est admis ici que l'application principale s'est préalablement déclarée comme privilégiée et que le système d'exploitation a contrôlé ses paramètres de *memory feeding.*

Une première étape (étape 700) a pour objet la détection d'une interruption. Si une interruption est détectée, une étape suivante (étape 705) consiste en un test pour déterminer si l'interruption vise la suspension de l'exécution d'une application principale ou non.

Si l'interruption vise la suspension de l'exécution d'une application principale, le contexte de l'exécution de cette application est mémorisé (étape 710). Comme indiqué précédemment, cette étape permet notamment de mémoriser des références mémoires en cours de l'application principale.

Dans le cas contraire, si l'interruption ne vise pas la suspension de l'exécution d'une application principale, l'interruption est traitée de façon standard (étape 715).

Tant qu'il n'est pas arrêté, cet algorithme se répète pour traiter toutes les interruptions.

Parallèlement, comme illustré sur la figure 7b, lorsque la reprise de l'exécution d'un processus est planifiée par l'ordonnanceur (étape 720), un test est effectué pour déterminer si l'application correspondant au processus dont la reprise est programmée est une application principale ou non (étape 725).

Si l'application correspondant au processus dont la reprise est programmée est une application principale, le processus fils de chargement mémoire est appelé pour mettre en œuvre une fonction de *memory feeding* (étape 730). Cette étape vise à faire remonter en mémoire, dans la hiérarchie mémoire, des données dont les références ont été mémorisées lors de la mémorisation du contexte d'exécution de l'application principale selon les paramètres de cette dernière (fixés lors de la déclaration de l'application comme application principale). Il est rappelé ici que le processus fils est, de préférence, exécuté par un cœur logique appartenant à un cœur physique comprenant un autre cœur logique utilisé pour exécuter l'application principale de telle sorte que le processus fils et l'application principale partage au moins une partie de la hiérarchie mémoire. Il a pour objet d'aller chercher en mémoire des données à des adresses préalablement mémorisées selon des tailles de blocs liées à l'application principale.

Tant qu'il n'est pas arrêté, cet algorithme se répète pour traiter toutes les reprises d'exécution d'applications.

La figure 8 illustre certaines étapes d'un exemple d'algorithme mis en œuvre par un processus fils de chargement mémoire permettant d'optimiser la reprise d'exécution d'une application principale.

Après avoir été appelé, le processus fils de chargement mémoire accède (étape 800) aux références préalablement mémorisées lors de l'interruption de l'exécution de l'application principale ainsi qu'aux paramètres liés à cette application. Les références mémorisées comprennent notamment des adresses de données tandis que les paramètres comprennent, en particulier, des tailles de blocs de données à *prefetcher* ainsi que des informations de synchronisation.

Comme décrit précédemment, en raison de l'exécution de processus distincts de l'application principale, les données devant être utilisées par l'application principale ne sont généralement plus mémorisées à proximité du microprocesseur, c'est-à-dire dans une partie haute de la hiérarchie mémoire, en particulier en mémoire cache de niveau L1, mais dans une partie inférieure. Les références accédées sont donc utilisées pour accéder, selon un mécanisme standard, à ces données (étape 805) qui se trouvent dans la hiérarchie mémoire. Selon ce mécanisme, un test est effectué sur un premier niveau de mémoire, par exemple une mémoire cache L1, pour déterminer si les données sont présentes à ce niveau. Dans l'affirmative, elles sont accédées selon des paramètres prédéterminés. Dans la négative, un autre test est effectué sur un second niveau de mémoire, inférieur au premier niveau de mémoire, par exemple une mémoire cache L2, pour déterminer si les données sont présentes à ce niveau. Ainsi, en testant la présence des données cherchées dans chaque niveau de mémoire, de proche en proche, les données sont retrouvées dans le niveau de mémoire le plus élevé.

Les données accédées sont alors mémorisées dans une partie haute de la mémoire selon des paramètres prédéterminés (étape 810). Il est observé ici que, comme suggéré par l'utilisation de trait pointillé, cette étape n'est généralement pas mise en œuvre de façon explicite par le processus fils. En effet, cette étape résulte de l'accès aux données. Elle est réalisée automatiquement par le microprocesseur lors de l'accès par le truchement des effets en cascade d'appels matériels.

Comme indiqué précédemment, de nombreux microprocesseurs susceptibles d'être utilisés dans des nœuds de clusters mettent en œuvre la technologie appelée *simultaneous multi-threading* (ou *hyperthreading* selon l'implémentation d'Intel, Intel est une marque) permettant de créer des cœurs logiques. Lors de l'utilisation de ces microprocesseurs, cette technologie peut être activée ou non.

La figure 9 représente de façon simplifiée l'architecture logique d'un microprocesseur d'un nœud appartenant à un cluster, le microprocesseur comprenant ici deux cœurs physiques mettant en œuvre chacun deux cœurs logiques, c'est-à-dire un microprocesseur dans lequel le *simultaneous multi-threading* a été activé, lorsqu'une application de calcul haute performance est exécutée. Chaque cœur physique permet ici d'exécuter jusqu'à quatre instructions dans un même cycle en raison des différentes unités d'exécution implémentées dans chaque cœur physique. Ainsi, deux cœurslogiques peuvent exécuter chacun jusqu'à quatre instructions selon l'utilisation effectuée par l'autre cœur.

Comme illustré, les cœursphysiques 900-1 et 900-2 sont reliés à un bus système 905 auquel peuvent notamment être connectés une interface de communication et une mémoire. Chaque cœur physique comprend des unités d'exécution partagées entre les cœurslogiques et un registre d'instructions propre à chaque cœur logique.

Ainsi, le cœur physique 900-1 comprend un ensemble 910-1 d'unités d'exécution ainsi que le registre d'instructions 915-11 lié à un premier cœur logique du cœur physique 900-1 et le registre d'instructions 915-12 lié à un second cœur logique du cœur physique 900-1. De même, le cœur physique 900-2 comprend un ensemble 910-2 d'unités d'exécution ainsi que le registre d'instructions 915-21 lié à un premier cœur logique du cœur physique 900-2 et le registre d'instructions 915-22 lié à un second cœur logique du cœur physique 900-2.

Les instructions exécutées par chacun des cœurslogiques sont ici représentées par les carrés noirs. Ainsi, comme illustré, les cœurslogiques associés aux registres d'instructions 915-11 et 915-21 sont en charge d'exécuter toutes les applications ainsi que le système d'exploitation, à l'exception des processus fils de gestion mémoire qui sont exécutés par les cœurslogiques associés aux registres mémoire 915-21 et 915-22 pour permettre une reprise rapide des applications principale exécutées par les cœurslogiques associés aux registres d'instructions 915-11 et 915-21.

Naturellement, pour satisfaire des besoins spécifiques, une personne compétente dans le domaine de l'invention pourra appliquer des modifications dans la description précédente.

## Revendications

1. Procédé pour ordinateur d'optimisation d'accès mémoire dans un microprocesseur dudit ordinateur lors de la reprise d'exécution d'une application principale, ledit microprocesseur permettant l'exécution simultanée d'au moins deux processus dans un environnement comprenant une mémoire partagée organisée de façon hiérarchique comprenant au moins une partie haute et une partie basse, au moins une donnée étant copiée de la partie basse vers la partie haute pour être traitée par ladite application principale, ledit ordinateur étant adapté à interrompre l'exécution de ladite application principale, ce procédé étant **caractérisé en ce qu'**il comprend les étapes suivantes,
- lors d'une interruption de l'exécution de ladite application principale pour exécuter au moins une application annexe,
∘ mémorisation (710) d'au moins une référence à au moins une donnée mémorisée dans une partie haute de ladite mémoire, ladite au moins une donnée devant être utilisée pour permettre l'exécution de ladite application principale ;
- durant l'exécution de ladite au moins une application annexe, après une programmation d'une reprise d'exécution de ladite application principale et avant la reprise d'exécution de ladite application principale,
∘ accès (805) à ladite au moins une donnée dans une partie basse de ladite mémoire selon ladite au moins une référence ; et,
∘ mémorisation (810) de ladite au moins une donnée dans une partie haute de ladite mémoire,
et **en ce que** le microprocesseur est un microprocesseur multi-cœurs qui permet la mise en œuvre d'au moins deux cœurslogiques dans un même cœur physique, chacun desdits au moins deux processus pouvant être exécuté par un cœur logique, lesdits au moins deux cœurslogiques partageant ladite mémoire partagée, ladite application principale étant exécutée par l'un desdits au moins deux cœurslogiques, des instructions relatives à l'exécution desdites étapes d'accès et de mémorisation de ladite au moins une donnée étant transmises à l'autre desdits au moins deux cœurslogiques sur lequel est lancé un processus fils de chargement de mémoire.

2. Procédé selon la revendication précédente comprenant en outre une étape d'accès (800) à au moins un paramètre de configuration de ladite application principale, ladite étape d'accès à ladite au moins une donnée étant réalisée selon ledit au moins un paramètre.

3. Procédé selon la revendication précédente comprenant en outre une étape préliminaire de déclaration durant laquelle ladite au moins une application principale est déclarée privilégiée et une étape de définition dudit au moins paramètre.

4. Procédé selon la revendication précédente comprenant en outre une étape de vérification dudit au moins un paramètre, ledit au moins un paramètre définissant une taille de bloc de données, ladite au moins une référence comprenant au moins une adresse mémoire.

5. Procédé selon l'une quelconque des revendications précédentes selon lequel lesdites instructions de mémorisation de ladite au moins une référence à ladite au moins une donnée et d'accès à ladite au moins une donnée sont initiées par une couche logique dudit ordinateur.

6. Procédé selon la revendication précédente selon lequel ladite couche logique appartient à un système d'exploitation mis en œuvre dans ledit ordinateur.

7. Programme d'ordinateur comprenant des instructions adaptées à la mise en œuvre de chacune des étapes du procédé selon l'une quelconque des revendications précédentes lorsque ledit programme est exécuté sur un ordinateur.

8. Moyen de stockage d'informations, amovible ou non, partiellement ou totalement lisible par un ordinateur ou un microprocesseur comportant des instructions de code d'un programme d'ordinateur qui lorsqu'elles sont exécutées mettent en œuvre chacune des étapes du procédé selon l'une quelconque des revendications 1 à 6.

## Patentansprüche

1. Verfahren für einen Rechner zur Optimierung des Speicherzugriffs in einem Mikroprozessor des Rechners bei der Wiederaufnahme der Ausführung einer Hauptanwendung, wobei der Mikroprozessor die gleichzeitige Ausführung von mindestens zwei Prozessen in einer Umgebung erlaubt, umfassend einen gemeinsam benutzten Speicher, der hierarchisch organisiert ist, der mindestens einen oberen Teil und einen unteren Teil umfasst, wobei mindestens ein Datenelement vom unteren Teil in den oberen Teil kopiert wird, um von der Hauptanwendung verarbeitet zu werden, wobei der Rechner geeignet ist, die Ausführung der Hauptanwendung zu unterbrechen, wobei dieses Verfahren **dadurch gekennzeichnet ist, dass** es die folgenden Schritte umfasst:
- bei einer Unterbrechung der Ausführung der Hauptanwendung zwecks Ausführung von mindestens einer Nebenanwendung,
o Speichern (710) mindestens einer Referenz auf mindestens ein in einem oberen Teil des Speichers gespeichertes Datenelement, wobei das mindestens eine Datenelement verwendet werden muss, um die Ausführung der Hauptanwendung zu erlauben;
- während der Ausführung der mindestens einen Nebenanwendung, nach einer Programmierung einer Wiederaufnahme der Ausführung der Hauptanwendung und vor der Wiederaufnahme der Ausführung der Hauptanwendung,
∘ Zugriff (805) auf das mindestens eine Datenelement in einem unteren Teil des Speichers gemäß der mindestens einen Referenz; und
∘ Speichern (810) des mindestens einen Datenelements in einem oberen Teil des Speichers,
und dass der Mikroprozessor ein Multicore-Mikroprozessor ist, der die Durchführung von mindestens zwei Logikkernen in demselben physikalischen Kern erlaubt, wobei jeder der mindestens zwei Prozesse von einem logischen Kern ausführbar ist, wobei sich mindestens zwei logische Kerne den gemeinsam benutzten Speicher teilen, wobei die Hauptanwendung von einem der mindestens zwei logischen Kernen ausgeführt wird, wobei Anweisungen bezüglich der Ausführung der Zugangs- und Speicherschritte des mindestens einen Datenelements an den anderen der mindestens zwei logischen Kerne übertragen werden, auf dem ein Speicherlade-Kindprozess gestartet wird.

2. Verfahren nach vorangehendem Anspruch, umfassend ferner einen Zugriffsschritt (800) auf mindestens einen Konfigurationsparameter der Hauptanwendung, wobei der Zugriffsschritt auf das mindestens eine Datenelement gemäß dem mindestens einen Parameter durchgeführt wird.

3. Verfahren nach vorangehendem Anspruch, umfassend ferner einen vorherigen Deklarationsschritt, bei dem die mindestens eine Hauptanwendung als privilegiert deklariert wird, und einen Definitionsschritt des mindestens einen Parameters.

4. Verfahren nach vorangehendem Anspruch, umfassend ferner einen Überprüfungsschritt des mindestens einen Parameters, wobei der mindestens eine Parameter eine Datenblockgröße definiert, wobei die mindestens eine Referenz mindestens eine Speicheradresse umfasst.

5. Verfahren nach einem der vorangehenden Ansprüche, wobei die Anweisungen zum Speichern der mindestens einen Referenz auf das mindestens eine Datenelement und des Zugriffs auf das mindestens eine Datenelement von einer logischen Schicht des Rechners initiiert werden.

6. Verfahren nach vorangehendem Anspruch, wobei die logische Schicht zu einem Betriebssystem gehört, das auf dem Rechner ausgeführt wird.

7. Rechnerprogramm, umfassend Anweisungen, die zur Durchführung von jedem der Schritte des Verfahrens nach einem der vorangehenden Ansprüche geeignet sind, wenn das Programm auf einem Rechner ausgeführt wird.

8. Mittel zum Speichern von Informationen, die lösbar sind oder nicht, teilweise oder vollständig von einem Rechner oder einem Mikroprozessor lesbar, aufweisend Codeanweisungen eines Rechnerprogramms, die, wenn sie ausgeführt werden, jeden der Schritte des Verfahrens nach einem der Ansprüche 1 bis 6 ausführen.

## Claims

1. A computer method for optimising a memory access in a microprocessor of said computer upon resuming running of a main application, said microprocessor enabling at least two processes to be simultaneously run in an environment comprising a hierarchically organised shared memory comprising at least one high part and one low part, at least one piece of data being copied from the low part to the high part to be processed by said main application, said computer being adapted to interrupt running said main application, this method being **characterised in that** it comprises the following steps of,
- upon interrupting running said main application to run at least one auxiliary application,
∘ storing (710) at least one reference to at least one piece of data stored in a high part of said memory, said at least one piece of data needing to be used to enable said main application to be run;
- upon running said at least one auxiliary application, after programming resuming running of said main application and before resuming running said main application,
∘ accessing (805) said at least one piece of data in a low part of said memory according to said at least one reference; and,
∘ storing (810) said at least one piece of data in a high part of said memory,
and **in that** the microprocessor is a multicore microprocessor which enables at least two logical cores to be implemented in a same physical core, each of said at least two processes being able to be run by a logical core, said at least two logical cores sharing said shared memory, said main application being run by one of said at least two logical cores, instructions relating to performing said steps of accessing and storing said at least one piece of data being transmitted to the other of said at least two logical cores on which a memory loading child process is launched.

2. The method according to the previous claim, further comprising a step of accessing (800) to at least one parameter for configuring said main application, said step of accessing to said at least one piece of data being performed according to said at least one parameter.

3. The method according to the previous claim, further comprising a preliminary step of declaring during which said at least one main application is declared as favoured and a step of defining said at least one parameter.

4. The method according to the previous claim, further comprising a step of checking said at least one parameter, said at least one parameter defining a data block size, said at least one reference comprising at least one memory address.

5. The method according to any of the previous claims, wherein said instructions for storing said at least one reference to said at least one piece of data and accessing said at least one piece of data are initiated by a logical layer of said computer.

6. The method according to the previous claim, wherein said logical layer belongs to an operating system implemented in said computer.

7. A computer program comprising instructions adapted to implement each of the steps of the method according to any of the previous claims when said program is run on a computer.

8. A removable or not removable, computer or microprocessor partially or fully readable information storage means, comprising code instructions of a computer program which, when run, implement each of the steps of the method according to any of claims 1 to 6.
